# EUROPEAN PATENT APPLICATION

(11) **EP 3 150 456 A1**
(43) Date of publication of application: **05.04.2017**
(21) Application number: 15802840.7
(22) Date of filing: 02.06.2015
(51) Int. Cl.: B61B 1/02, E01F 1/00

(54) **METHOD FOR SENSING OBJECTS AROUND PLATFORM SCREEN DOORS**

(30) Priority: 02.06.2014 KR 20140067078
(71) Applicant: The Korea Transport Institute, Sejong 339-007 (KR)
(72) Inventor: KIM, Hyun, Seoul 157-791 (KR)
(74) Representative: Hague, Alison Jane
(86) International application number: PCT/KR2015/005510
(87) International publication number: WO 2015/186948

(57) **Abstract**

An object, which is present in a clearance space to be blocked by a plurality of platform screen doors, is sensed by one beam sensor device, and it is determined to which of the plurality of platform screen doors the object is closest. The platform screen door to which the object is closest is controlled according to predetermined rules.

## Description

### [Technical Field]

The present invention is directed to a method for detecting an object which exists in the proximity of a platform-screen-door using a beam-sensor.

### [Background Art]

A platform-screen-door is an apparatus for preventing a passenger standing on a platform installed in a train station, through which a train passes or at which a train stops, from falling off to a railroad, or preventing a collision between a passenger and a train running beside the platform.

In spite that a platform-screen-door is provided to protect a passenger from a train, a negligent accident can occur due to the platform-screen-door itself. For example, in the course of opening and closing a platform-screen-door, a passenger may be stuck between the platform-screen-door and be injured.

In order to prevent a negligent accident due to a platform-screen-door, an object-detection-sensor is installed in the proximity of each door of the platform-screen-door. The object-detection-sensor can detect an object such as a human body. In a case that an object in the proximity of the platform-screen-door is detected by the object-detection-sensor, in order to prevent a negligent accident, it is possible to control to stop the door-closing operation of the platform-screen-door in the course of closing the platform-screen-door or to change the status of the platform-screen-door into an open status.

As an above mentioned object-detection-sensor, a beam-sensing-device having a pair of light emitting part and a light reception part can be adopted. Such a beam-sensing-device can be used for a conventional left-to-right open/close type screen door. The left-to-right open/close type screen door may comprise two door leaves each of which is opened along the right direction and the left direction respectively, because the width of the passenger aisle introduced by opening of the two door leaves is merely about 2 meters, it is easy to align the light axis of the light emitting part of the beam-sensing-device with the light axis of the light reception part of the beam-sensing-device.

However, because the left-to-right width of a door leaf which moves up and down in an up-to-down open/close type screen door may be wider than 6 meters to 8 meters, the distance between the light emitting part and the light reception part of the beam-sensing-device may also be farther than 6 meters to 8 meters, if the beam-sensing-device is adapted for use. In this case, it is not easy to align the light axis of the light emitting part with the light axis of the light reception part, and even if the alignment between the light axis of the light emitting part with the light axis of the light reception part is successfully done at initial setting moment, the alignment may turn to fail with time progression. Therefore, adoption of the beam-sensing-device having a pair of the said light emitting part and light reception part is difficult for the up-to-down open/close type screen door wherein the left-to-right width of a door leaf is relatively wider.

### [Disclosure]

### [Technical Problem]

The present invention is to provide with a new technique for detecting an obstacle which exists in the proximity of a platform-screen-door using a sensing-device having only a light emitting part.

Specifically, the present invention is to provide a technique for detecting an obstacle which exists in the proximity of a plurality of screen doors only with a single beam-sensing-device, for identifying a specific platform-screen-door corresponding to the location of the obstacle, and for controlling the identified platform-screen-door individually.

### [Technical Solution]

In order to solve the above mentioned problem, for a detection method according to one aspect of the present invention, a commercial beam-sensing-device which is already sold in the market and capable of providing a coordinate of a location of an object which exists within the maximum detection range Dmax(ex: Dmax=60m) of the beam-sensing-device.

The beam-sensing-device may be installed the upper portion of the frame of a platform-screen-door. In this case, the posture of the beam-sensing-device can be adjusted for installation so that the light axis of a beam emitted from the beam-sensing-device substantially directs to the extended direction of a platform. The light axis of the beam-sensing-device may be controlled to have an arbitrary angle between a first angle ( = -90°) directed to a vertically downward direction and a second angle ( = 0°) directed to a horizontal direction along the extended direction of the platform.

As the above beam-sensing-device, a commercial product may be used which is configured to calculate the distance from the commercial product to an object which exists on the route of the beam emitted from a light emitting part of the commercial product. That is, the commercial product may be configured to figure out the distance between the commercial product and an object the emitted beam meets firstly. At this time, because the angle of the emitted beam with respect to a predetermined line is controlled by the beam-sensing-device, the angle of the emitted beam can be known in advance. Therefore, by using the angle of the emitted beam and the information regarding the distance to the object, the coordinate of the object can be calculated.

The above beam-sensing-device may be installed every two or more number of screen-doors which are consecutively installed along a platform. For example, in a case that the maximum detection distance of the beam-sensing-device Dmax is 60-meters and the left-to-right width of each screen-door is 10-meters, a single beam-sensing-device can detect a coordinate of an object which exists in a space occupied in the proximity of a total six number of consecutively installed screen-doors.

When a coordinate of an object is acquired by a beam-sensing-device, the acquired coordinate may be matched to one of the plurality of screen-doors. Because it can be construed that the object exists in the proximity of the matched screen-door, the matched screen door alone can be controlled individually.

According to one aspect of the present invention, a method for controlling opening and closing of a platform-screen-door may be provided. This method uses a beam-sensing-device capable of acquiring a spatial-coordinate regarding a location of an object. This method comprises: acquiring a first spatial-coordinate regarding a location of a first object which exists in a clearance-space between a railroad and a total N number of platform-screen-doors installed along an extended direction of a platform using the beam-sensing-device; identifying a first platform-screen-door which is most adjacent to the first object among the total N number of platform-screen-doors using the first spatial-coordinate; and controlling opening and closing of the first platform-screen-door according to a predetermined rule.

Preferably, the clearance-space may be divided into a total N number of sub-clearance-spaces each of which corresponds to each of the total N number of platform-screen-doors, respectively, each of the total N number of sub-clearance-spaces may be defined by a total N number of spatial-coordinate-sections, and the identifying may comprise a step of determining which one among the total N number of spatial-coordinate-sections the first spatial-coordinate belongs to.

Preferably, the method may further comprise: controlling opening and closing of a second platform-screen-door among the total N number of platform-screen-doors, which is located farther from the beam-sensing-device than the first platform-screen-door, together with the controlling opening and closing of the first platform-screen-door.

Preferably, a marker structure may be attached to a frame of a platform-screen-door system including the total N number of platform-screen-doors, or the marker structure is one part of the platform-screen-door system.

Preferably, the marker structure may be installed at a point which can be detected by the beam-sensing-device, and in a case that the spatial-coordinate of the marker structure acquired by the beam-sensing-device has an error compared to a predetermined value, the method further comprises a step for calibrating the error.

Preferably, the step for calibrating may comprise a step for automatically changing the posture of the beam-sensing-device in order to calibrate the error.

Preferably, the step for calibrating may comprise creating a mapping function for changing the spatial-coordinate of the marker structure acquired by the beam-sensing-device to the predetermined value in order to calibrate the error; and changing the spatial-coordinate of a location of an object acquired by the beam-sensing-device by applying the created mapping function.

A platform-screen-door system according to another aspect of the present invention comprises: a beam-sensing-device capable of acquiring a spatial-coordinate regarding a location of an object; a total N number of platform-screen-doors installed along a platform beside a railroad; a multi-door control unit; and a total N number of DCUs(Door Control Units) connected to each of the total N number of platform-screen-doors respectively in order to control the operation of each of the total N number of platform-screen-doors. The beam-sensing-device is configured to acquire a first spatial-coordinate regarding a location of a first object which exists in a clearance-space between the railroad and the total N number of platform-screen-doors, the multi-door control unit is configured to identify a first platform-screen-door which is most adjacent to the first object among the total N number of platform-screen-doors using the first spatial-coordinate, and the multi-door control unit is further configured to provide a first DCU of the total N number of DCUs with a signal according to a predetermined rule in order to control opening and closing of the first platform-screen-door with a predetermined rule, the first DCU being connected to the first platform-screen-door.

Preferably, the multi-door control unit and the beam-sensing-device may be integrated in a single device.

Preferably, the multi-door control unit may be configured to detect a spatial-coordinate of a marker structure disposed at the platform-screen-door system or in the clearance-space, and configured to determine if the detected spatial-coordinate has an error compared to a predetermined value, and configured to start a predetermined subsequent process in order to calibrate the error in a case that the error exists.

### [Advantageous Effects]

According to the present invention, because it can be determined which one among two or more screen-doors the object detected by a beam-sensing-device exists most close to, the screen-door which is closest to the detected object than other screen-doors can be controlled individually.

### [Description of Drawings]

Fig. 1 (a) depicts a view of platform-screen-door system which can be used for one embodiment of the present invention, which is seen from railroad to a platform. Fig. 1(b) depicts the platform-screen-door system shown in Fig. 1 (a) seen from above looking downward.
Fig. 2 is a drawing to explain an operation principle of a beam-sensing-device according to one embodiment of the present invention.
Fig. 3 illustrates a method for dividing an area detectable by the beam-sensing-device as shown in Fig. 2 into a plurality of areas.
Fig. 4 (a) shows a configuration of a platform-screen-door system provided for the said method for controlling a platform-screen-door.
Fig. 4 (b) is a flowchart showing a method for controlling the said platform-screen-door.
Fig. 5a and Fig. 5b are drawings to explain that the width of a platform-screen-door can be differently set according to different embodiments.
Fig. 6a and Fig. 6b are drawings for explaining a method for determining whether a train has stopped at a regular-position or not, based on the arrangement of platform-screen-doors, according to one embodiment of the present invention.
Fig. 7 is a drawing for explaining a method for detecting whether an entrance-door of a car is opened or not using a beam-sensing-device provided according to one embodiment of the present invention, explained with reference to Fig. 1 to Fig. 4.
Fig. 8a and Fig. 8b are drawings for explaining a method for detecting an obstacle in a clearance-space using a pair of beam-sensing-devices according to one embodiment of the present invention.

### [Mode for Invention]

In the following, embodiments of the present invention are described in detail with reference to the accompanying drawing. However, the present invention may be implemented in many different forms and is not limited to embodiments that are described herein. The terms used herein are just intended to mention specific embodiments and not intended to limit the present invention. Also, singular terms used herein also include plural forms unless referred to the contrary.

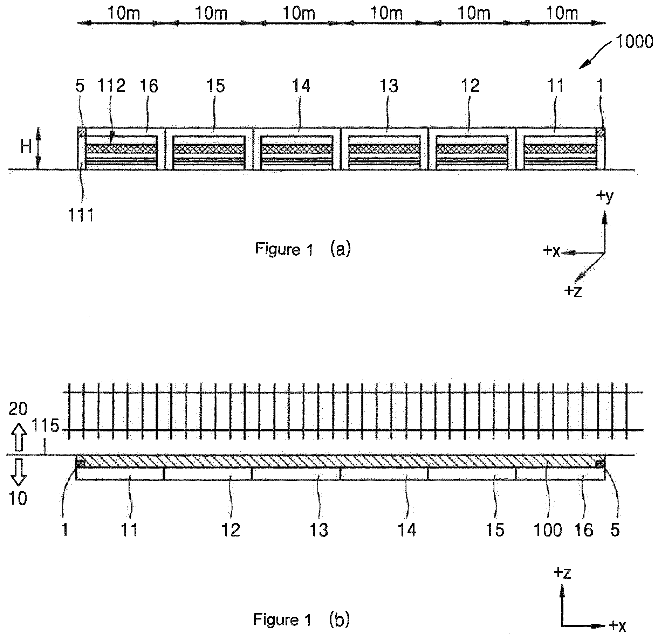

Fig. 1 (a) depicts a view of platform-screen-door system which can be used for one embodiment of the present invention, which is seen from railroad to a platform. Fig. 1(b) depicts the platform-screen-door system shown in Fig. 1 (a) seen from above looking downward. In Fig. 1, the x-axis represents the extended direction of a railroad and a platform, the y-axis represents vertical direction, and the z-axis represents a horizontal direction which is orthogonal both to the x-axis and y-axis.

A platform-screen-door system 1000 may comprise a plurality of platform-screen-doors 11-16. Each of the plurality of platform-screen-doors may comprise a frame comprised of a pair of vertical frames installed apart from each other along the extended direction of the platform, and a horizontal frame connecting the top end of the one of the pair of vertical frames to the top end of the other one of the pair of vertical frames. Here, one or more door-leaves which can move along vertical direction may be provided with between the pair of vertical frames. A machine assembly which moves the one or more door leaves along vertical direction may be installed inside of the pair of vertical frames and the horizontal frame. For example, the vertical frame of the platform-screen-door 16 depicted in Fig. 1 (a) is represented by the reference number 111 and a door leaf is represented by the reference number 112.

In one embodiment, the door leaf may be comprised of an upper door leaf and a lower door leaf. The vertically moving velocity of the upper door leaf may be a half of the vertically moving velocity of the lower door leaf. The upper door leaf and the lower door leaf may not overlap each other when each of the upper door leaf and the lower door leaf stays at its lowest position respectively, and the upper door leaf and the lower door leaf may overlap with respect to each other when each of the upper door leaf and the lower door leaf stays at its highest position respectively.

The upper door leaf may consist of a plate-type member, and the lower door leaf may consist of a plurality of ropes each of which is extended along a horizontal direction. However, the structure of each one of the door leaves is not restricted to the above mentioned limitation, and can be chosen freely.

Referring to Fig. 1 (b), the platform 10 can be distinguished from the railroad 20 by the border line 115. The railroad 20 provides a route along which a train moves. A platform-screen-door system 1000 may be installed on the platform 10, and a clearance-space 100 may be provided with between the border line 115 and the platform-screen-door system 1000. The clearance-space 100 may be a space where any passenger is not allowed to occupy the space when a train on the railroad 20 passes by or approaches or leaves the platform. The clearance-space 100 may be the space between the platform-screen-door system 1000 and the edge line of the platform 10 which faces the railroad 20. The height of the clearance-space 100 may be designed to have the same height or a similar height of the height of the screen-door shown in Fig. 1 (a).

A beam-sensing-device 1 provided according to one embodiment of the present invention may be installed at the horizontal frame of a platform-screen-door 11 which is selected among the plurality of platform-screen-doors 11-16. The beam-sensing-device 1 may be provided with the purpose of detecting whether any object exists in the clearance-space 100 or not.

In addition, the marker structure 5 provided according to one embodiment of the present invention may be a structure with a certain volume installed at an arbitrary selected point in the plurality of clearance-spaces 100 or the area adjacent to the plurality of clearance-spaces, or in other embodiments, the marker structure may be fixed to the frame of the platform-screen-door.

The marker structure 5 may be used as a reference position for the beam-sensing-device 1 to automatically adjust the light axis of the beam-sensing-device in a case that the light axis of the beam-sensing-device has been deviated from the originally aligned direction. Because the beam-sensing-device 1 is not an image processing device which processes an image, the marker structure 5 needs to have a volume distinguished from other objects in order to be recognized as an object by the beam-sensing-device 1.

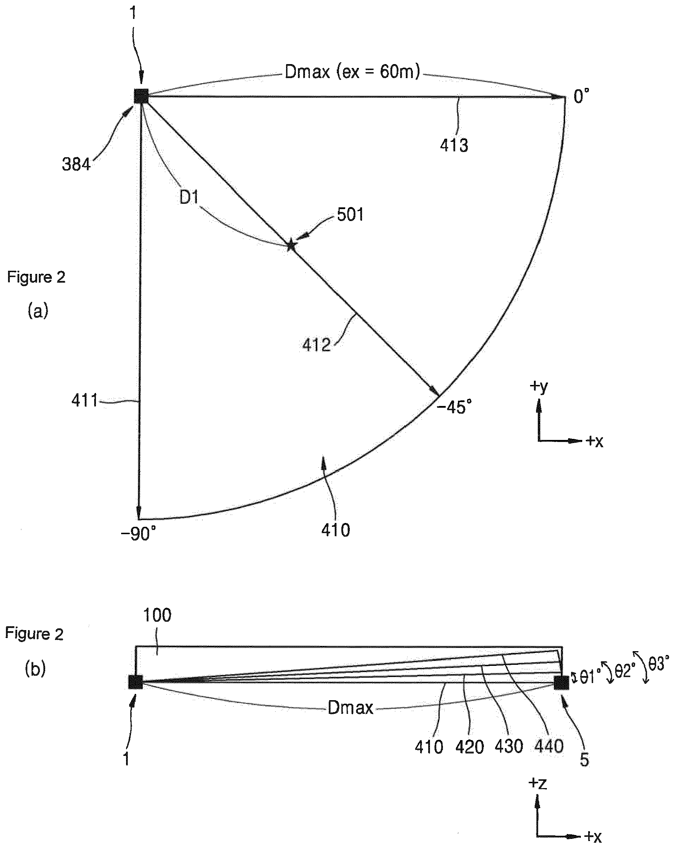

Fig. 2 is a drawing to explain an operation principle of a beam-sensing-device according to one embodiment of the present invention.

The beam-sensing-device 1 may be configured to emit a beam, and the beam-sensing-device may be disposed so that the emitted beam runs along a straight line which passes through the point where the beam-sensing-device 1 is disposed at, the straight line being on the x-y plane. Here, in the example of Fig. 2 (a), the beam-sensing-device 1 emits beam 411, beam 412, and beam 413 toward the directions inclined towards the y-axis with an angle of -90°, -45°, and 0° with respect to the +x-axis, respectively. In a real implementation, the direction of the beam emitted from the beam-sensing-device 1 may be controlled to be inclined towards the y-axis with any angle between -90° to 0° with respect to the +x-axis, the beam running on the x-y plane. Such a configuration can be implemented by continuously rotating the light axis of a beam-emitting-optical-system (not depicted) included in the beam-sensing-device 1 using a motor. Therefore, the light axis of the beam-emitting-optical-system may be swept to be inclined towards the y-axis with an angle of between -90° to 0° with respect to the +x-axis.

The beam-sensing-device 1 may be configured to detect the presence of an object which exists within a distance which is a maximum of Dmax (ex: Dmax=60m) away from the beam-occurring origin-point 384 and to detect the location of the object. If an object exists at a distance from the beam-occurring origin-point 384, which is D1 (D1 < Dmax) away from the beam-occurring origin-point 384, the beam-sensing-device 1 can detect that an object 501 exists at the distance, and can provide information that the distance from the beam-occurring origin-pint 384 to the object 501 is the above D1. In Fig. 2 (a), for example, because the beam 412 emitted to detect the object 501 is inclined towards the y-axis with an angle of -45° with respect to the +x-axis, a specific *Cartesian* coordinate (x, y, z) of the object 501 can be calculated using the information of the said D1 and the inclined angle of -45°. The detection area of the beam-sensing-device 1 explained in Fig. 2 (a), for example, may correspond to a first partial plane 410 which is a quadrant plane among the four quadrant planes which are defined in a circle with a radius of Dmax.

A commercial product as a beam-sensing-device 1 providing a function enabling the above explained features is already provided in a commercial market, and therefore, the operating principle of how to detect an object is not explained in this specification

Fig. 2 (b) is to explain another function of the said beam-sensing-device 1.

Fig. 2 (b) shows the x-z plane view, which corresponds to a view shown downward from above a platform.

The axis of the beam-emitting-optical-system included in the beam-sensing-device 1 can be controlled to be inclined towards the z-axis with an angle of θ0° (ex: 0°), θ1° (ex: 2°), θ2° (ex: 4°), or θ3° (ex: 6°) with respect to the +x-axis, wherein the axis of the beam-emitting-optical-system is on the x-z plane. Therefore, the beam-sensing-device 1 can perform a light-axis sweeping operation by which the axis is swept to be inclined towards the y-axis with angles from -90° to 0°, and the light-axis sweeping operation can be perform independently for each of the four partial planes inclined towards the z-axis with the angle of θ0°, θ1°, θ2°, and θ3°, respectively. For example, in a case that the light-axis sweeping operation explained in Fig. 2 (a) is performed in a condition that the axis of the beam-emitting-optical-system is maintained to be inclined towards the z-axis with an angle of θ0° with respect to the +x-axis, an object which exists in the first partial plane 410 can be detected. Otherwise, in a case that the light-axis sweeping operation explained in Fig. 2 (a) is performed in a condition that the axis of the beam-emitting-optical-system is maintained to be inclined towards the z-axis with an angle of θ1°, θ2°, or θ3° with respect to the +x-axis, an object which exists in the second partial plane 420, the third partial plane 430, or the fourth partial plane 440 can be detected respectively. Then, a process which sequentially detects objects which exists in the first to the fourth partial plane may be performed repeatedly. Here, the second partial plane 420, the third partial plane 430, and the fourth partial plane 440 may have the same shape as the shape of the first partial plane 410, respectively, and the second partial plane 420, the third partial plane 430, and the fourth partial plane 440 may correspond to a plane which can be obtained by rotating the first partial plane 410 towards the z-axis with an angle of θ1°, θ2°, and θ3° with respect to the y-axis.

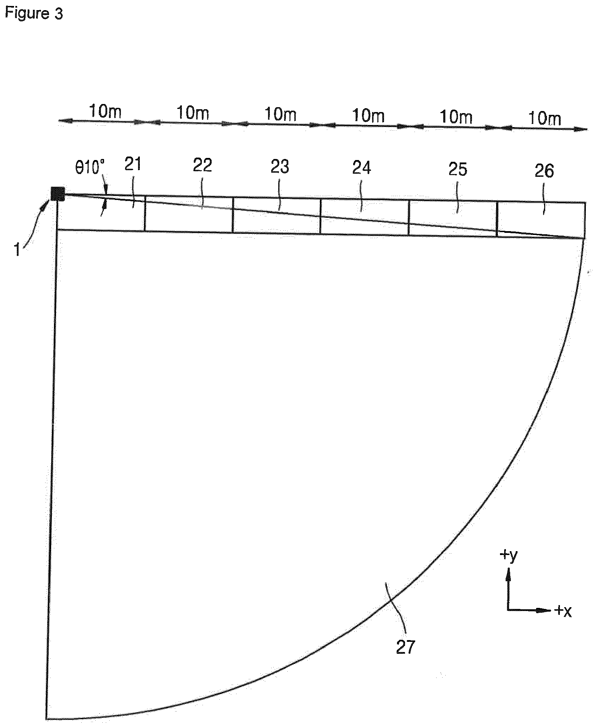

Fig. 3 illustrates a method for dividing an area (a partial plan) detectable by the beam-sensing-device as shown in Fig. 2 into a plurality of areas.

The beam-sensing-device 1 may control the direction of the axis of the beam emitted from the beam-sensing-device so that the axis of the beam is inclined towards the y-axis with an arbitrary angle between -90° to 0° with respect to the +x-axis. In this case, the first partial plane 410 which can be detected by the beam-sensing-device 1 may be divided into a plurality of areas 21~27. Among the plurality of areas 21-27, it can be configured such that each of the plurality of the areas 21~26 corresponds to some part of the clearance-space 100 which exists in the proximity of each of the platform-screen-doors 11~16 shown in Fig. 1 (a). That is, for example, if the left-to-right width of each of the platform-screen-doors 11~16 is given as 10 meters, the width along the x-axis of each of the plurality of areas 21~26 also can be defined to be 10 meters.

An object-detection-process which detects an object using the beam-sensing-device 1 according to one embodiment of the present invention, may comprise a first process which detects an object which exists on the first partial plane 410 wherein the beam-sensing-device 1 can detect an object.

The first process may comprise a first step in which the axis of the beam emitted from the beam-sensing-device 1 is swept to be inclined within a predetermined range of angle. In this case, the sweeping may be conducted in an incontinuous manner where the emission angle of the beam is changed in stepwise way with a predetermined jumping angle within the predetermined range of angle.

For example, in a case that the predetermined range of angle is set from -90° to 0° towards the y-axis with respect to the +x-axis and the predetermined jumping angle is set as 0.5°, a total 180 (=90/0.5) number of detection samples can be obtained for the first partial plane 410.

In this case, referring to the example depicted in Fig. 3, the floor of the platform can be detected in a case that the axis of the beam is inclined towards the y-axis with an angle of between -90° and θ10° with respect to the +x-axis, it is not allowed to determine that any obstacle has been detected when the floor has been detected. In this case, the floor corresponds to an upper edge border part of the area 27 of Fig. 3. Therefore, in a case that the axis of the beam is inclined towards the y-axis with an angle of between -90° and θ10° with respect to the +x-axis (θ10°< 0°), it can be determined such that any object has not been detected when the coordinate (x, y, z) of the detected material is not included in the area 27.

In addition, the first process may comprise a second step by which the beam-sensing-device 1 outputs the coordinate (x, y, z) of an object when the object is detected on the first partial plane 410, wherein the second step is conducted simultaneously with the first step or after the first step. The z-coordinate value of every point included in the first partial plane 410 may be zero(0).

Further, after the first process, the object-detection-process may conduct a second process in which the beam-sensing-device 1 rotates the axis of the beam towards the z-axis by an angle of θ1° with respect of the +x-axis, and then detects an object which exists on the second partial plane 420.

Further, after the second process, the object-detection-process may conduct a third process in which the beam-sensing-device 1 rotates the axis of the beam towards the z-axis by an angle of θ2° with respect of the +x-axis, and then detects an object which exists on the third partial plane 430.

Further, after the third process, the object-detection-process may conduct a fourth process in which the beam-sensing-device 1 rotates the axis of the beam towards the z-axis by an angle of θ3° with respect of the +x-axis, and then detects an object which exists on the fourth partial plane 440.

Further, the sequentially performed said first process to the fourth process may be repeated, and when an object is detected at each process, the coordinate (x, y, z) of the detected object can be output(the z-coordinate value of an object detected with the first process may be always zero (0)).

According to one embodiment of the present invention, a method for controlling a platform-screen-door using the coordinate of an object detected by the above object-detection-process can be provided.

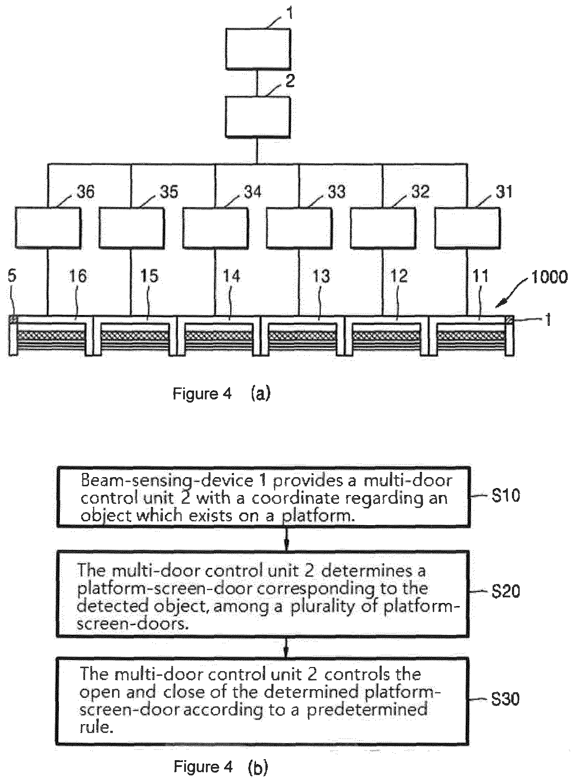

Fig. 4 (a) shows a configuration of a platform-screen-door system provided for the said method for controlling a platform-screen-door. The platform-screen-door system may include a beam-sensing-device 1, a multi-door control unit 2, a plurality of door control units 31~36 controlled by the multi-door control unit 2, and a plurality of platform-screen-doors 11~16 controlled by each of the plurality of door control units 31~36 respectively.

Fig. 4 (b) is a flowchart showing a method for controlling the said platform-screen-door.

The method may comprise a step S10 of acquiring a coordinate (x, y, z) regarding an object which exists on a platform from the beam-sensing-device 1. At this time, the beam-sensing-device 1 may use the said object-detection-process. At this time, the beam-sensing-device 1 may provide a multi-door control unit 2 included in the platform-screen-door system with the coordinate (x, y, z).

Then, in a step S20, the multi-door control unit 2 may determine which one among the plurality of platform-screen-doors 11~16 shown in Fig. 1 (a) the coordinate (x, y, z) of the detected object corresponds to. To do this, the multi-door control unit 2 may determine which one among a plurality of predetermined areas the coordinate (x, y, z) of the detected object is included in. At this time, the plurality of predetermined areas may be, for example, the areas 21~26 shown in Fig. 3. Further, each of the plurality of predetermined areas 21~26 may correspond to each of the plurality of platform-screen-doors 11~16 shown in Fig. 1 (a) in an one-to-one manner, respectively.

Then, in a step S30, the multi-door control unit 2 may transmit a signal having an instruction to control the open/close of a first platform-screen-door (ex: 14) in a predetermined manner, to a door control unit(DCU) (ex: 34) connected to the first platform-screen-door.

At this time, the control for the open/close of the first platform-screen-door may be conducted in various manners according to various circumstances. For example, in a circumstance that a moving of a passenger is allowed through the first platform-screen-door, the first platform-screen-door may be unceasingly kept open irrespective of a detection result of an object. Otherwise, for example, in a case that the object has been detected in the course of closing the first platform-screen-door, an operation of ceasing to close the first platform-screen-door can be performed or an operation of ceasing to close the first platform-screen-door and then re-opening the first platform-screen-door can be performed.

In a step S30, the multi-door control unit 2 may also transmit a signal having an instruction to control the open/close of other platform-screen-doors (ex: 15~16) in a predetermined manner, to door control units(DCU) (ex: 35~36) connected to the other platform-screen-doors, as well as to the door control unit(DCU) (ex: 34) connected to the first platform-screen-door (ex: 14) which corresponds to the detected object, wherein the other platform-screen-doors exist farther than the first platform-screen-door from the beam-sensing-device 1. For example, in a case that the object exists in the area 24 of Fig. 3, the first platform-screen-door may correspond to the platform-screen-door 14 of Fig. 2(a). In this case, even if other person exists in proximity of the platform-screen-doors 15 and 16 of Fig. 1 (a), the existence of the other person may not be detected because the beam is blocked by the object. Therefore, because it cannot be determined whether any object exists or not in the proximity of the platform-screen-doors 15 and 16, the platform-screen-doors 15 can 16 can be controlled under the assumption that an object exists in the proximity of the platform-screen-doors 15 and 16.

### <Adjustment of a reference zero point of a beam-sensing-device>

Until now, according to one embodiment of the present invention, a method for controlling the opening/closing of one or more platform-screen-doors among a plurality of platform-screen-doors has been explained in a circumstance that an object exists in the proximity of a clearance-space of the plurality of platform-screen-doors. In the meanwhile, the axis of beam of the beam-emitting-optical-system of the beam-sensing-device 1 may be deviated from the initial set position due to the wind pressure by a train, etc.

The marker structure 5 shown in Fig. 1 and Fig. 2 is provided in order to automatically adjust the reference zero point of the beam-sensing-device 1. At the time when the beam-sensing-device 1 is installed at the platform-screen-door 11 for the first time, the marker structure 5 can be installed at a point where the beam-sensing-device 1 can recognize the marker structure 5 as an object. Here, in a case that the coordinate (x, y, z) of the marker structure 5 detected by the beam-sensing-device 1 is given as (x1, y1, z1), then the (x1, y1, z1) may be regarded as a reference zero point. If the posture of the beam-sensing-device 1 has been deviated from the initially set posture during operation of a platform-screen-door system, the coordinate (x, y, z) of the marker structure 5 detected by the beam-sensing-device 1 may have other value of (x2, y2, z2) than the above said (x1, y1, z1). At this moment, the beam-sensing-device 1 can adjust its own posture by itself so that the coordinate (x, y, z) of the marker structure 5 detected by the beam-sensing-device 1 have the value of (x1, y1, z1) again. Otherwise, a parameter of a transform function f which conducts a mapping process transforming the coordinate value of (x2, y2, z2) into the coordinate value of (x1, y1, z1) may be set, and then the transform function is applied to the every coordinate of all objects detected by the beam-sensing-device 1 in order to transform the every coordinate.

### <Embodiment regarding the width of a platform-screen-door>

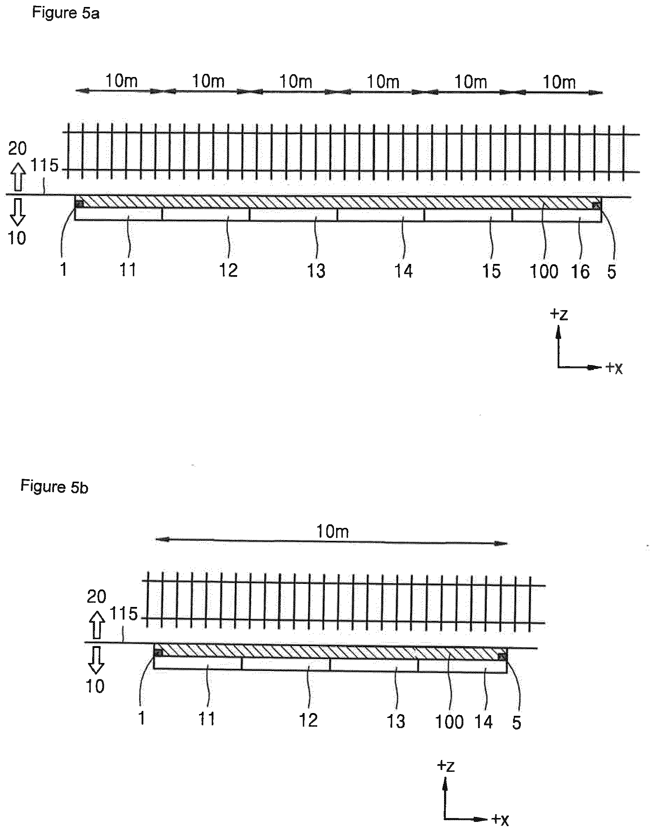

Fig. 5a and Fig. 5b are drawings to explain that the width of a platform-screen-door can be differently set according to different embodiments.

Fig. 5a is a drawing which shows only the (b) part of Fig. 1. In this drawing, the length along the x-axis of a door leaf installed at each of the platform-screen-door 11~16 may be about 10 meters. In this case, supposing that the length along the x-axis of each car of a train approaching on a railroad is about 10 meters, it can be understood that each platform-screen-door corresponds to each car. Referring to Fig. 5a, it can be understood that a platform-screen-door system comprised of a total of six platform-screen-doors can be operated in response for a train having six cars.

Fig. 5b shows an embodiment where the length along the x-axis of each door leaf is shorter than that of the platform-screen-door system of Fig. 5a. In this case, the length along the x-axis of each door leaf installed in each of platform-screen-doors 11-14 may be about 2.5(=10/4) meters. In this case, supposing that the length along the x-axis of each car of a train approaching on a railroad is about 10 meters and a total of four entrance-doors of each car are equally spaced out with each other in the car, it can be understood that each platform-screen-door corresponds to each entrance-door. Referring to Fig. 5b, it can be understood that a platform-screen-door system comprised of a total of four platform-screen-doors 11~14 can be operated in response for a car of a train, and a super-system comprised of a total of six consecutively installed said platform-screen-door systems can be operated in response for a train having the said six cars.

It can be understood that the embodiments of the present invention explained in Fig. 1 to Fig. 4 can be applied also to the platform-screen-door system shown in Fig. 5b.

### <Embodiment regarding a method for determining whether a train has stopped or not at a regular-position on the basis of the arrangement of platform-screen-doors>

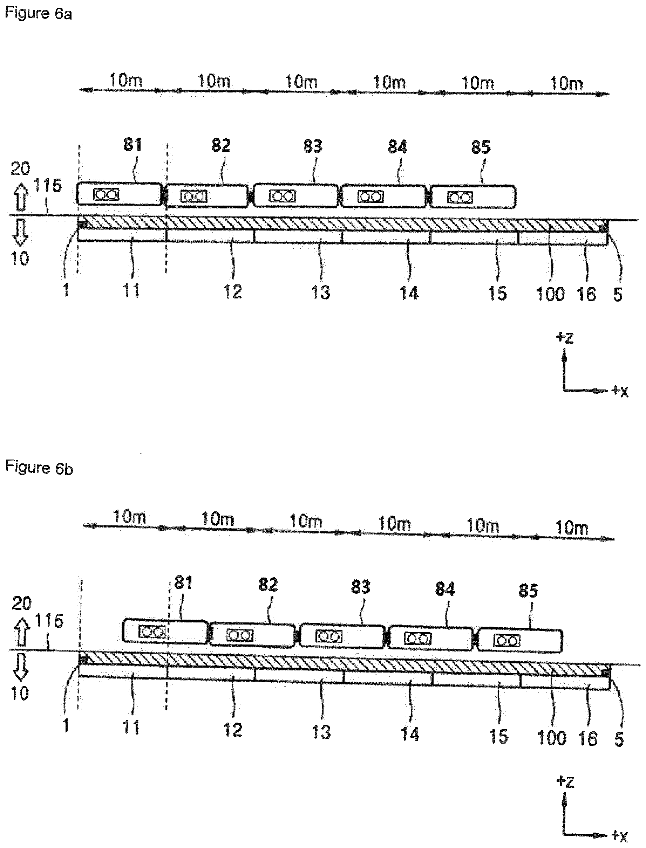

Fig. 6a and Fig. 6b are drawings for explaining a method for determining whether a train has stopped at a regular-position or not, based on the arrangement of platform-screen-doors, according to one embodiment of the present invention.

Fig. 6a is a drawing for explaining a method for determining whether a train has been stopped at a regular-position according to a comparative technique. In Fig. 6a, the train is supposed to be headed for the -x direction. In this case, it can be determined that a train has stopped at a regular-position only when the train has stopped so that the head-end of the train is located in the proximity of the -x direction edge of the first platform-screen-door 11. In this case, supposing that, for example, the second platform-screen-door 12 cannot be opened, the passengers in the second car 82 cannot go out to the platform through the second platform-screen-door 12. Therefore, the passengers in the car 82 should move to the first car 81, and then go out to the platform through the opened first platform-screen-door 11, or otherwise, the passengers in the car 82 should move to the third car 83, and then go out to the platform through the opened third platform-screen-door 13, and this is very inconvenient for the passengers.

Fig. 6b is a drawing for explaining a method for determining whether a train has been stopped at a regular-position according to one embodiment of the present invention. In Fig. 6b, the train is supposed to be headed for the -x direction. In this case, it can be determined that a train has stopped at a regular-position only when the train has stopped so that the head-end of the train is located at the center of the line connecting between the -x direction edge and the +x direction edge of the first platform-screen-door 11. In this case, supposing that, for example, the second platform-screen-door 12 cannot be opened, the passengers in the second car 82 cannot go out to the platform through the second platform-screen-door 12. However, the passengers in the car 82 can go out to the platform through the left half portion of the third platform-screen-door 13 which is opened and intersects with the +x direction half portion of the second car, without moving to the first car 81 or the third car 83. In the embodiment of Fig. 6b, the length along the x-axis of one car may be substantially the same as the length along the x-axis of one of the platform-screen-doors 11~16.

### <Embodiment regarding a method for detecting whether an entrance-door of a car is opened or not using a beam-sensing-device provided according to one embodiment of the present invention>

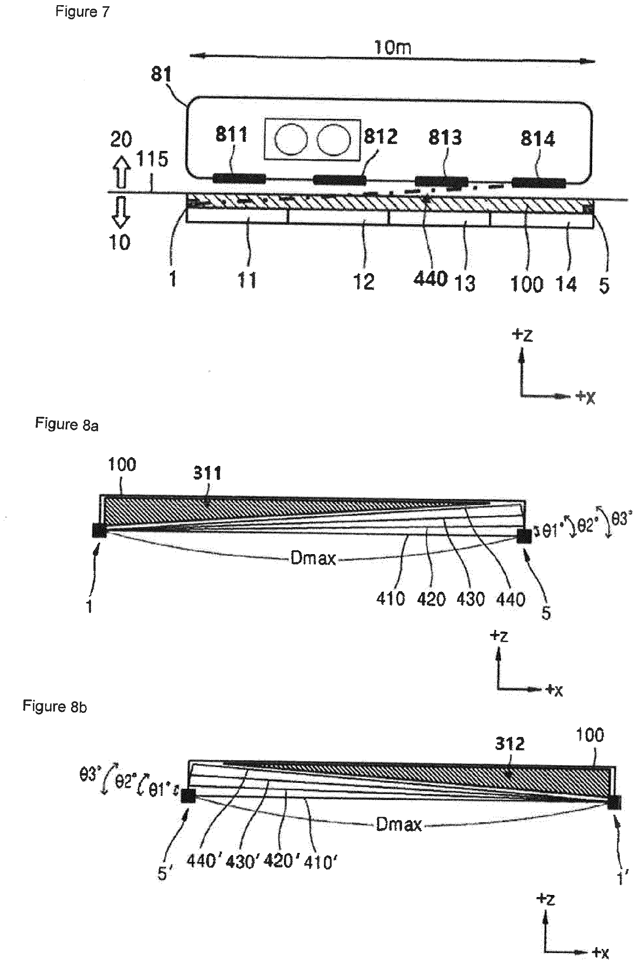

Fig. 7 is a drawing for explaining a method for detecting whether an entrance-door of a car is opened or not using a beam-sensing-device provided according to one embodiment of the present invention, explained with reference to Fig. 1 to Fig. 4.

As explained above, the axis of the beam-emitting-optical-system may be rotated to be inclined with an angle of θ° with respect to the +x-axis on the x-z plane, and in this case, the area detectable by the beam-sensing-device 1 may be the above mentioned fourth partial plane 440. Here, a first portion of the fourth partial plane 440 may exist outside the clearance-space 100 when a certain specific value is set for the angle θ°. Further, an entrance-door 814 among the entrance-doors installed in the car 81 may exist in the first portion. In this case, the beam-sensing-device 1 can determine if an object exists or not on the spatial-coordinates where the entrance-door 814 exists. If it is determined that an object exists in the spatial-coordinates, it can be determined that the entrance-door 814 is closed, otherwise, if it is determined that no object exists in the spatial-coordinates, it can be determined that the entrance-door 814 is opened. In order to conduct this determination method, it should be supposed that no obstacle exists in the clearance-space 100. That is, the determination method is useful during a time period when no passenger exists in the clearance-space. For example, in the case that it is designed such that the door leaves of the platform-screen-door system is controlled to be closed only if all of the entrance-doors of the train are closed after all passengers get into the train, the beam-sensing-device can assist for determining if all of the entrance-doors of a train is closed or not by determining if a specific entrance-door is closed or not after all of the passengers get into the train.

### <Embodiment for detecting an obstacle in a clearance-space using a pair of beam-sensing-devices>

Fig. 8a and Fig. 8b are drawings for explaining a method for detecting an obstacle in a clearance-space using a pair of beam-sensing-devices according to one embodiment of the present invention.

Fig. 8a is a drawing reconfigured from Fig. 2 (b). In Fig. 8a, the beam-sensing-device 1 can detect an obstacle which exists on the first partial plane to the fourth partial plane 410, 420, 430, and 430. However, there is a problem that, because the so-called first dead-zone 311 in the clearance-space 100 which is depicted in Fig. 8a does not included in any one of the first to fourth partial planes 410, 420, 430, and 440, an obstacle which exists in the first dead-zone 311 cannot be detected.

Fig. 8b shows a configuration according to the present invention, where an additional beam-sensing-device 1' is additionally installed on the right portion of the clearance-space whereas the beam-sensing-device 1 is installed on the left portion of the clearance-space, wherein the beam-sensing-device 1' has the same function as that of the beam-sensing-device 1. In Fig. 8b, the beam-sensing-device 1' can detect an obstacle which exists on the newly defined a first to a fourth partial planes 410', 420', 430', and 440'. Because the newly defined a first to a fourth partial planes 410', 420', 430', and 440' overlap with at least part of the above mentioned first dead-zone 311, at least part of the object which exists in the first dead-zone 311 may be detected by the beam-sensing-device 1'. Even though a second dead-zone 312 is defined for the use of the beam-sensing-device 1', it can be understood that an object which exists in the second dead-zone 312 can be detected using the beam-sensing-device 1.

Fig. 8a and Fig. 8b is presented for the convenience of explanation and drawing, in a real implementation, the beam-sensing-device 1 may be placed very close to the second marker structure 5' and the beam-sensing-device 1' may be placed very close to the marker structure 5.

The clearance-space which is formed between a pair of beam-sensing-devices 1 and 1' which are facing to each other as depicted in Fig. 8a and Fig. 8b can be referred to as a first clearance-space.

Although exemplary embodiments of the present invention have been described, a person skilled in the art to which the present invention pertains may easily implement various variations and modifications without departing from the essential characteristic of the present invention. Each limitation of each claim described in the following claims set may be combined to other claim which does not citing the claim or is not cited by the claim if it can be understood from the description of this specification.

### [Explanation of reference numbers]

- 1, 1':: beam-sensing-device
- 2:: multi-door control unit
- 5, 5':: marker structure
- 10:: platform
- 20:: railroad
- 21∼28:: a first area ~ an eighth area
- 31∼36:: Door Control Unit (DCU)
- 11∼16:: platform-screen-door
- 100:: clearance-space
- 384:: beam-occurring origin-point
- 411∼413:: beam
- 410, 410':: a first partial plane
- 420, 420':: a second partial plane
- 430, 430':: a third partial plane
- 440, 440':: a fourth partial plane
- 1000:: platform-screen-door system

## Claims

1. A method for controlling opening and closing of a platform-screen-door using a beam-sensing-device capable of acquiring a spatial-coordinate regarding a location of an object, comprising:
acquiring a first spatial-coordinate regarding a location of a first object which exists in a clearance-space between a railroad and a total N number of platform-screen-doors installed along an extended direction of a platform using the beam-sensing-device;
identifying a first platform-screen-door which is most adjacent to the first object among the total N number of platform-screen-doors using the first spatial-coordinate; and
controlling opening and closing of the first platform-screen-door according to a predetermined rule.

2. The method of claim 1, wherein,
the clearance-space is divided into a total N number of sub-clearance-spaces each of which corresponds to each of the total N number of platform-screen-doors, respectively,
each of the total N number of sub-clearance-spaces is defined by a total N number of spatial-coordinate-sections,
the identifying comprises a step of determining which one among the total N number of spatial-coordinate-sections the first spatial-coordinate belongs to.

3. The method of claim 1, further comprising: controlling opening and closing of a second platform-screen-door among the total N number of platform-screen-doors, which is located farther from the beam-sensing-device than the first platform-screen-door, together with the controlling opening and closing of the first platform-screen-door.

4. The method of claim 1, wherein,
a marker structure is installed at a point which can be detected by the beam-sensing-device, and
in a case that the spatial-coordinate of the marker structure acquired by the beam-sensing-device has an error compared to a predetermined value, the method further comprises a step for calibrating the error.

5. The method of claim 4, wherein, the marker structure is attached to a frame of a platform-screen-door system including the total N number of platform-screen-doors, or the marker structure is one part of the platform-screen-door system.

6. The method of claim 4, wherein, the step for calibrating comprises a step for automatically changing the posture of the beam-sensing-device in order to calibrate the error.

7. The method of claim 5, wherein,
the step for calibrating comprises:
creating a mapping function for changing the spatial-coordinate of the marker structure acquired by the beam-sensing-device to the predetermined value in order to calibrate the error; and
changing the spatial-coordinate of a location of an object acquired by the beam-sensing-device by applying the created mapping function.

8. The method of claim 1, further comprising: determining whether to open or close an entrance-door of a train on the railroad by using whether an obstacle is detected or not in a part of a partial plane, which is over the railroad but is not included in the clearance-space, the partial plane being a plane where a beam emitted by the beam-sensing-device passes along.

9. A platform-screen-door system, comprising:
a beam-sensing-device capable of acquiring a spatial-coordinate regarding a location of an object;
a total N number of platform-screen-doors installed along a platform beside a railroad;
a multi-door control unit; and
a total N number of DCUs(Door Control Units) connected to each of the total N number of platform-screen-doors respectively in order to control the operation of each of the total N number of platform-screen-doors,
wherein,
the beam-sensing-device is configured to acquire a first spatial-coordinate regarding a location of a first object which exists in a clearance-space between the railroad and the total N number of platform-screen-doors,
the multi-door control unit is configured to identify a first platform-screen-door which is most adjacent to the first object among the total N number of platform-screen-doors using the first spatial-coordinate, and
the multi-door control unit is further configured to provide a first DCU of the total N number of DCUs with a signal according to a predetermined rule in order to control opening and closing of the first platform-screen-door with a predetermined rule, the first DCU being connected to the first platform-screen-door.

10. The platform-screen-door system of claim 9, wherein, the multi-door control unit and the beam-sensing-device are integrated in a single device.

11. The platform-screen-door system of claim 9, wherein,
the multi-door control unit is configured to detect a spatial-coordinate of a marker structure disposed at the platform-screen-door system or in the clearance-space, and configured to determine if the detected spatial-coordinate has an error compared to a predetermined value, and configured to start a predetermined subsequent process in order to calibrate the error in a case that the error exists.

12. The platform-screen-door system of claim 9, further comprising:
a second beam-sensing-device capable of acquiring a spatial-coordinate of an object,
wherein,
the beam-sensing-device and the second beam-sensing-device are configured to acquire the first spatial-coordinate together,
the beam-sensing-device is disposed at a position where the beam-sensing-device can emit a beam toward the second beam-sensing-device, and the second beam-sensing-device is disposed at a position where the second beam-sensing-device can emit a beam toward the beam-sensing-device.

13. The platform-screen-door system of claim 9, wherein,
the multi-door control unit is configured to receive a regular-position stop signal which is provided in a case that a head-portion of a train which stopped on the railroad is aligned with a center point of a specific platform-screen-door among the total N number of the platform-screen-doors, and
in order for a passenger to alight from the train, the multi-door control unit is configured to perform a first operation mode, wherein, a process for opening a total N number of close platform-screen-doors is performed only when the regular-position stop signal is received in the first operation mode.
